# EUROPEAN PATENT SPECIFICATION

(11) **EP 3 395 662 B1**
(45) Date of publication and mention of the grant of the patent: **02.10.2019**
(21) Application number: 16831893.9
(22) Date of filing: 12.12.2016
(51) Int. Cl.: B62M 3/04

(54) **EXTENDABLE BICYCLE CRANKS**
VARIABLE FAHRRAD KURBELARME
MANIVELLE EXTENSIBLE POUR CYCLE

(30) Priority: 23.12.2015 ES 201531888
(43) Date of publication of application: 31.10.2018
(73) Proprietor: Irujo Lopez, Fernando, 31251 Larraga - Navarra (ES); Gazpio 4, S.L., 31002 Pamplona - Navarra (ES)
(72) Inventor: IRUJO LOPEZ, Fernando, 31251 Larraga - Navarra (ES)
(74) Representative: Carvajal y Urquijo, Isabel
(86) International application number: PCT/ES2016/070880
(87) International publication number: WO 2017/109247

(56) References cited:
- WO-A1-00/51880
- DE-C- 81 523
- FR-A- 659 222
- FR-A1- 2 427 242
- US-A- 4 882 945

## Description

### Object of the invention

The present invention relates to a device for pedaling a bicycle which comprises two crank arms mounted in opposite directions at the ends of a bottom bracket, which is situated in the bottom bracket shell in the lower part of a bicycle frame, in which both crank arms make up the respective cranks, each one of which has a pedal at the end thereof. Specifically, it relates to a device in which these crank arms incorporate a mechanism for the synchronous extension or shortening thereof, extending the lever arm in the driving crank arm (forward and downward) and shortening the lever arm in the crank arm during retraction (in which the pedal is in an upward motion and in which normally there is no driving force).

### Background of the invention

In recent years, several technological advances have been applied to bicycles in order to reduce the effort of pedaling when moving on the bicycle from one place to another. Among these designs, there have been various attempts to modify the length of the crank arms for the pedals, synchronizing this length change with the movement of the crank arms in order to achieve a cyclical extension and retraction, thereby taking full advantage of the force that is exerted on the pedals. Mechanisms with this aim are described in several patent documents:
Document ES 0 460 074 describes a bicycle pedal mechanism with variable geometry, in which a crank is made up of two telescopic elements, one inserted in the bottom bracket and the other adjusted to a mechanism which causes an alternative circular motion such that the length of the crank varies with each turn of the bottom bracket between a maximum and minimum value, said mechanism comprising a circular toothed part, coaxial to the bottom bracket, with epicyclic gearing which transfers the rotational movement to a reciprocating motion of the second crank element.
Document ES 2 268 911 describes a system of power transmission by means of an elliptical pedaling motion with crank arms of variable lengths, applicable to bicycles, made up of a power transmission bracket and by an auxiliary mechanism, the internal movement of which is effected by means of a chain and toothed sprockets. The transmission bracket converts the components perpendicular to the power crank arm into transmission momentum, and the auxiliary mechanism, by means of a stationary gear and a planetary gear with a diameter half the size of that of the stationary gear and which revolves around the same, produces a longitudinal movement of the crank arm by means of a crank and a cam follower, making it so the length of the crank arm varies and so the pedals describe an elliptical trajectory. The transmission bracket and the auxiliary mechanism are situated on each side of the bottom bracket, fixed on the right side to the toothed chain rings of the bicycle.

Due to a lack of reliability and flexibility, these cranks have never prevailed on the bicycle market, and one of the reasons is that in the mechanics of pedaling, specifically at high cycling cadences, the use of systems with elliptical trajectories is counterproductive, since the appropriate way of transforming the reciprocating motion of a cyclist's legs is circumferential rotation, as has been proven in several different studies on pedaling dynamics and as can be seen in anyone who uses a stationary elliptical bicycle, in which one never fully gets used to this unnatural movement.

The document US4882945, which discloses the features of the preamble of claim 1, is regarded as closest prior art.

### Description of the invention

The present invention has the aim of overcoming all of these drawbacks, and to this end a device has been designed to enable the type of pedaling described in the introduction, characterized in that it achieves the extension of the driving crank arm (forward and downward) and the shortening of the crank arm in the retraction thereof (in which the pedal is in an upward motion and in which normally there is no driving force), describing a circular motion just as that of a traditional bicycle, but on a lever arm of variable length, at its maximum when the position of the driving crank arm is horizontal, and at its minimum when the position of the crank arm is horizontal and retracted, and at a medium length at the dead center positions, when the crank arms are situated vertically.

In the device of the invention, it is the pedals, necessarily situated in an essentially horizontal position at all times, which determine the degree of extension of the respective driving crank arm and the degree of retraction of the crank arm when retracted. And thus, from the vertical upwards position of the crank arm, and as it begins to move downwards, the driving crank arm begins to extend, reaching its maximum length when it is in a forward horizontal position. Conversely, when the crank arm returns up the other side (in retraction), from the downward vertical position to the upward vertical position, it is situated in the position of its shortest length. Generally, the shaft of a pedal describes a circular motion, but in this case its center does not correspond to the bottom bracket but rather is situated ahead of said bracket, and on the return (the upward motion of the back pedal) is when it describes a circumference with a smaller radius, while it is during forward motion (when the front pedal is pushed) when the radius of the curve described reaches its greatest length; yet the sum of the opposing radii is constant at all times.

This solution provides an extendible crank arm of a simple design which offers comfortable pedaling to the user, given that the extension is progressive and that it takes place at the arms of the crankset and has a high degree of reliability due to the absence of any type of gear system in the mechanism. Differing from other solutions, by using a set of crank arms of a conventional length, appropriate for the size of the cyclist, the pedal system proposed allows for greater pedaling momentum in proportion to the extension of the driving crank arm when the pedal is pushed forward.

In accordance with an embodiment of the invention, both crank arms mounted to the bottom bracket incorporate a longitudinal extension, the end of which incorporates a transverse bearing for the shaft of the corresponding pedal. The corresponding pedal is fixed to the outer end of this shaft, while the inner end is joined axially to an eccentric disk, the eccentric shaft of which is coupled to a second crank arm which is fixed to a stable point of the main crank arm, such that rotating the shaft of the pedal determines the movement of the extension, extending or shortening the length of the pedaling lever formed by the main crank arm and the corresponding extension thereof, depending on whether the pedal is in a position of impulsion or retraction, respectively.

The movement of the extension existing on the main crank arm is effected by means of a linear bearing, which is either integrated inside said crank arm, or in a supplementary part that is fixed close to the end of the main crank arm when it is a conventional crank arm. Thus, this device can be mounted to a bottom bracket with both newly designed crank arms in accordance with the aforementioned specifications, or also to both conventional crank arms, in which the pedal must be removed from its original position and later mounted on the extension incorporated in this crank arm to thereby implement this device.

Also envisaged is the ability to regulate the position of the pedal when it passes through the dead center positions situated on the vertical axis of the pedaling trajectory, allowing it to be slightly forward to avoid a light backwards pull and allowing the pedal to pass through these positions without the transition being noticeable. This regulation can be done by slightly modifying the position of the eccentric disk in its mounting to the shaft of the pedal, for example by means of a screw, or by varying the position in which the pedal is mounted to the shaft of the same, for example by means of an arched window, facing another arched window with a hole, associated, respectively, to the pedal and to the pedal, such that by means of a screw that connects the two, the pedal can be situated in a convenient forward position when it passes through the dead center positions situated in the vertical axis of the pedaling trajectory, in order to avoid a backwards pull from the upper pedal when it passes through this area.

Likewise, it has been envisaged to be able to regulate the extension and compression of the crank arms, and to do so the position of the point in which the auxiliary crank arm is fixed to the main crank arm must be varied, to thus be able to extend or shorten the length of the extension that projects from the main crank arm and complements it. Depending on whether we are dealing with a newly designed crank arm, in which case it will suffice to establish this point by means of a screw that slides along an existing longitudinal guide on the outer face of the first crank arm, which is immobilized by means of a threaded solution; or on if the device has been mounted to the end of a conventional crank arm, in which case it has been envisaged that the fastening point of the second crank arm is to be established by various holes or an arched window made in a fixed support in relation to the main crank arm, on the supplementary part fixed at the end of the same, with a transverse fastening screw at an established position.

### Description of the figures

As a complement to the description being made, and for the purpose of helping to make the characteristics of the invention more readily understandable, this specification is accompanied by a set of drawings which, by way of illustration and not limitation, represent the following.
Figure 1 shows a plan view with a partial cross section, when the pedals are in a horizontal position, in which one may observe how the driving pedal has a pedaling lever with a radius "D" which is essentially greater than that of the retracted pedal "d".
Figure 2 is a side elevation view of the preceding figure.
Figure 3 is a schematic view of the crank arms when they are situated in the end positions (horizontal and vertical), as well as the circular trajectory each pedal describes.
Figure 4 shows both elevation and plan views of this device implemented on conventional crank arms (3).
Figure 5 shows both detailed views of the coupling of the shaft (10) of the pedal and the pedal (11) itself, through a mechanism that allows the angle they form to be slightly varied in order to conveniently advance or retract the pedaling, specifically when the pedals pass through the dead center points.
Figure 6 and 7 show an embodiment according to the invention.

### Preferred embodiment of the invention

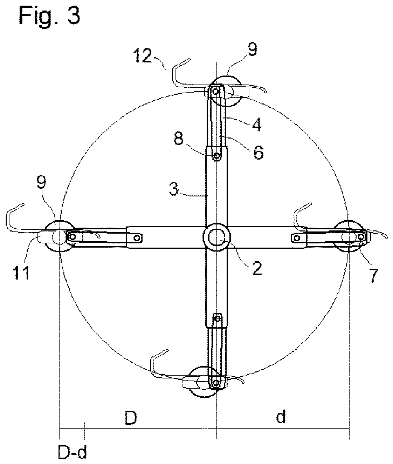

As can be seen in the referenced figures for the bicycle pedal (1), object of the invention, both crank arms (3) are mounted to both ends of a bottom bracket (2), said crank arms having a movable extension (4), associated by a mechanism that causes the extension and shortening thereof, synchronized with the position of the pedal (11) in its revolution around the bottom bracket (2), thereby extending the lever arm in the driving crank arm (forward and downward) and shortening the lever arm in the crank arm during retraction (in which the pedal is in an upward motion and in which normally there is no driving force). To this end, each one of the crank arms (3) incorporates an extension (4) which includes on the end thereof a bearing on which the shaft (10) of the pedal (11) rotates, which is fixed to said shaft by means of a fixed or movable solution. On the inner end, opposite the pedal (11), an eccentric disk (9) is fixed to the shaft (10), the eccentric shaft (7) of which is coupled to a second crank arm (6), the opposite end of which links to the main crank arm (3) at a fixed point (8). In this way, when rotating the shaft (10) of the pedal, since it is always in a horizontal position, conveniently coupled to the shoe of the cyclist by means of a toe clip (12) with respect to the bearing situated at the end of the extension (4) and, therefore, the eccentric disk (9), with respect to the extension, a measured back-and-forth movement (extension/shortening) of the extension (4) with respect to the main crank arm (3) is produced, which translates to a greater lever arm when the pedal (11) is in a driving position, ahead of the bottom bracket (2) and smaller in the crank arm which is in a retracted position, behind said bottom bracket (2). The proportion of the extension is that which causes an increase in the power of the pedaling with the same effort of the cyclist, and all while executing a uniform pedal radius equivalent to that of a bicycle with conventional crank arms of the same size. (See figure 3).

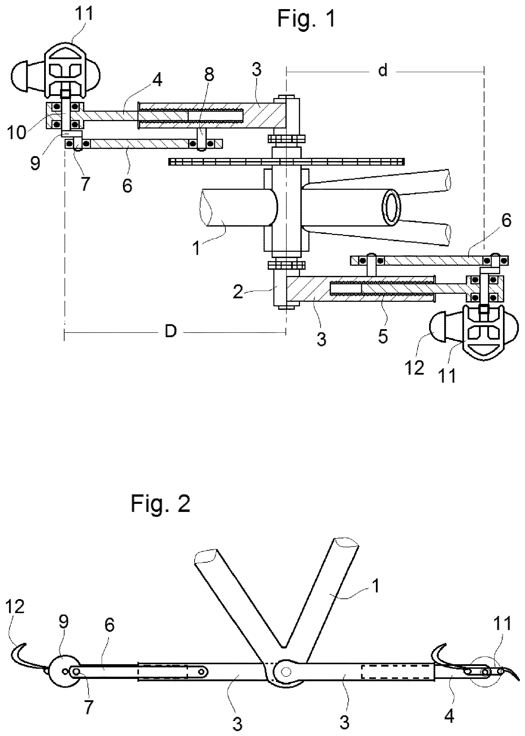

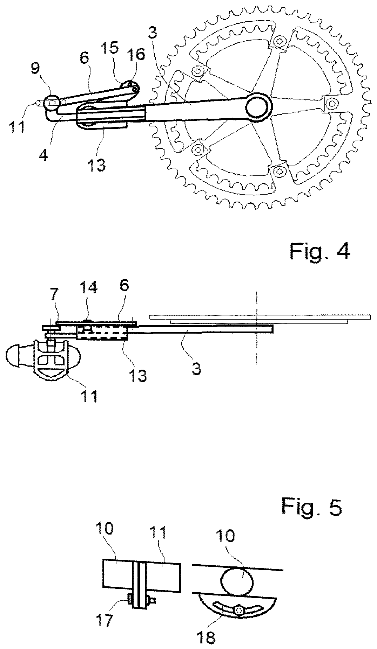

Figures 1 and 2 show an embodiment in which the longitudinal movement of the extension (4) with respect to the main crank arm (3) is effected by means of a linear bearing (5) which is integrated inside the main crank arm (3). However, in the embodiment represented in figure 4, this linear bearing (5) is integrated into a supplementary part (13) which is fixed close to the end of each main conventional crank arm (3), which in this case constitutes the base of the device.

This device can be integrated in a bicycle with newly designed crank arms, such as those shown in figures 1 and 2, or in a bicycle with conventional crank arms, as shown in figure 4, which in this case is mounted to the end of each crank arm, taking advantage of the threaded hole through which the pedal is normally fixed. This second solution allows this extension system of the crank arms to be applied at a lower added cost to any bicycle, given that it is not necessary to acquire the newly designed crank arms.

To avoid a "choppy" effect that is produced when the pedals pass through the dead center positions situated in the vertical position of the bottom bracket (2), it has been envisaged to either be able to modify the position of the eccentric disk (9) at its fastening to the shaft (10) of the pedal by means of a movable solution, such as a simple screw at that point, since loosening it slightly allows the eccentric disk to conveniently rotate. Figure 5 shows a variant in which the pedal (11) changes position with respect to the shaft (10); in this case the pedal (11) can also be conventional with a bearing that allows it to rotate and with a lug provided with an arched window (18), which is facing another one fixed to the shaft (10), suitable to fix the pedal (11) in the ideal position by means of a screw (17) which establishes the suitable angle that must be formed by the eccentric disk (9) when the pedal is situated horizontally at this point.

The eccentric disk (9) may be circular or form a lever, such as in the example shown. This constitution, together with the disposition of the aforementioned fastening flaps for the position of the pedal (11) placed on the lower part of the same, make up a counterweight that facilitates the horizontal position of the pedal at all times, which in turn facilitates the automatic placement of the feet of the cyclist on the same, with out the need to look down.

Figure 4 shows a solution to extend or shorten the maximum and minimum lengths of the extension of the piece (4), for which it is necessary to modify the point (8) at which the second crank arm (6) is fixed to the main crank arm (3). In this case, the complementary piece (13) has a support (15) in which there are various holes (16) suitable to fix the secondary crank arm (6) in a more forward or backward position. An alternative solution could also be one in which an arched window is used to be able to move this coupling point and leave it in a fixed position by tightening a simple screw, such that the cyclist could do it while cycling, in order to adjust the pedaling depending on the area through which they are cycling. In the newly designed embodiment, shown in figure 1, the fastening point (8) of the second crank arm (6) can be established by means of a screw that slides along an existing longitudinal guide on the outer face of the first crank arm (3), becoming immobilized by means of a threaded solution; in which case the cyclist may also adjust it while cycling.

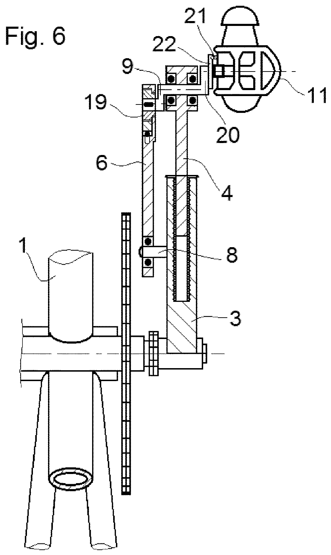

Figure 6 shows the claimed solution in which the eccentric shaft (7) of the eccentric disk (9), to which the second crank arm is coupled (6), is mounted on a ratchet-type bearing (19) or a freewheel bearing, the aim of which is to prevent the movement of the shaft (10) of the pedal in the opposite direction of the direction of cycling. In this case, the shaft (10) of the pedal, is coupled on its outer end to a second eccentric disk (20), the eccentric shaft of which is diametrically opposite the shaft (7) and incorporates the corresponding shaft of the pedal (11); such that the extensions of both eccentric disks (9, 20) are joined, extending or shortening the length of the pedaling lever formed by the main crank arm and the corresponding extension thereof, depending on whether the pedal is in a position of impulsion or retraction, respectively.

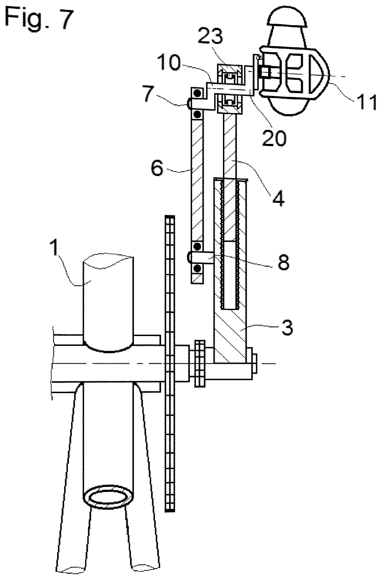

Avoiding backward rotation when this second eccentric disk (20) exists may be achieved if instead of placing the ratchet or the freewheel bearing (23) at the end of the second crank arm (6) it is placed at the end of the extension (4), as shown in figure 7, since in this position it also fulfills the objective of impeding the movement of the shaft (10) of the pedal in the opposite direction of the pedaling.

Also envisaged is the claimed solution, as shown in figures 6 and 7, in which the pedal (11) is mounted to the eccentric shaft of the eccentric disk (20) by means of a bearing and not fixed as in all of the prior solutions. In this case it is necessary, as in the prior examples, to immobilize it with respect to its shaft so that moving it during pedaling causes the movement of the eccentric disks and therefore the shortening and extension of the main crank arm (3), through the prolongation (4) thereof. With the aim of allowing the cyclist to be able to, at any moment, move the bottom bracket in the opposite direction, or stop pedaling, envisaged on the outer face of the outer eccentric disk (20) is a plate (22) on which there is a cut-out for a ball (21) which is embedded through the action of a spring on the same, marking the operating position of the pedal (11) with respect to the eccentric disk (20), also allowing the decoupling thereof and, therefore, the pedal to rotate in the opposite direction to the pedaling whenever the ball (21) comes out of said cut-out.

Having sufficiently described the nature of the invention, in addition to an example of preferred embodiment, it is hereby stated for the relevant purposes that the materials, shape, size and layout of the described elements may be modified, provided that it does not imply altering the essential characteristics of the invention claimed below:

## Claims

1. A bicycle pedal arrangement with extendible crank arms wherein both main crank arms (3) incorporate a mechanism for the synchronous extension or shortening thereof, extending the lever arm in the main crank arm (3) and shortening the lever arm in the main crank arm (3) during retraction, wherein both main crank arms (3) incorporate an extension (4), mounted longitudinally in each main crank arm (3) by means of a linear bearing (5), said extension (4) comprising at the end thereof a bearing for a shaft (10), the corresponding pedal (11) fixed to the outer end thereof, and the inner end being joined axially to an eccentric disk (9), an eccentric shaft (7) of which is coupled to a second crank arm (6) which is coupled at a fixed point (8) to the main crank arm (3), the rotation of the shaft (10) of the pedal (11) establishing the movement of the extension (4), extending or shortening the length of the pedaling lever formed by the main crank arm (3) and the corresponding extension (4) thereof depending on whether the pedal (11) is in a position of impulsion or retraction, respectively, the bicycle pedal with extendible crank arms (3) **characterized in that** the eccentric shaft (7) of the eccentric disk (9), to which the second crank arm (6) is coupled, is mounted to a ratchet-type bearing (19) or a freewheel bearing (23), while the shaft (10) of the pedal (11) is coupled on its outer end to a second eccentric disk (20), the eccentric shaft of which is diametrically opposite the eccentric shaft (7) of the eccentric disk (9), the corresponding pedal (11) mounted thereto, such that the extensions of both eccentric disks (9, 20) are joined, extending or shortening the length of the pedaling lever formed by the main crank arm (3) and the corresponding extension (4) thereof, depending on whether the pedal is in a position of impulsion or retraction, respectively.

2. The pedal according to claim 1, **characterized in that** the linear bearing (5) on which the extension (4) moves is integrated inside the main crank arm (3).

3. The pedal according to claim 1, **characterized in that** the linear bearing (5) on which the extension (4) moves is integrated in a supplementary part (13) that is fixed close to the end of each main crank arm (3).

4. The pedal according to the preceding claims, **characterized in that** the eccentric disk (9) is movably fixed to the shaft (10) of the pedal (11).

5. The pedal according to the preceding claims, **characterized in that** the pedal (11) is movably fixed to the shaft (10).

6. The pedal according to claim 5, **characterized in that** lower face of the pedal (11) has a lug provided with an arched window (18), facing another one fixed to the shaft (10).

7. The pedal, according to any of the preceding claims, **characterized in that** shaft of the pedal (11) is mounted by means of a bearing, the shaft (10) or the eccentric disk (20) having an outer plate (22) which has a cut-out which allows for a ball (21) which is embedded therein through the action of a spring which marks the operating position of the pedal (11) with respect to the shaft, allowing the decoupling of this interlocking to rotate the pedal (11) in the opposite direction to the pedaling whenever the ball (21) comes out of said cut-out.

## Patentansprüche

1. Fahrradpedalanordnung mit variablen Kurbelarmen, wobei die beiden Hauptkurbelarme (3) einen Mechanismus zum synchronen Verlängern oder Verkürzen derselben aufweisen, wobei der Hebelarm im Hauptkurbelarm (3) verlängert wird und der Hebelarm im Hauptkurbelarm (3) beim Einfahren verkürzt wird, wobei beide Hauptkurbelarme (3) eine Verlängerung (4) beinhalten, die in jedem Hauptkurbelarm (3) mittels eines Linearlagers (5) in Längsrichtung gelagert ist, wobei die genannte Verlängerung (4) an ihrem Ende ein Lager für eine Welle (10) umfasst, wobei das entsprechende Pedal (11) an deren äußerem Ende befestigt ist und das innere Ende axial mit einer Exzenterscheibe (9) verbunden ist, deren Exzenterwelle (7) mit einem zweiten Kurbelarm (6) gekoppelt ist, der an einem festen Punkt (8) mit dem Hauptkurbelarm (3) gekoppelt ist, wobei die Drehung der Welle (10) des Pedals (11) die Bewegung der Verlängerung (4) bestimmt und die Länge des durch den Hauptkurbelarm (3) und dessen entsprechende Verlängerung (4) gebildeten Pedalhebels verlängert oder verkürzt, je nachdem, ob sich das Pedal (11) jeweils in einer Ausfahr- oder Einfahrposition befindet, wobei das Fahrradpedal mit variablen Kurbelarmen (3) **dadurch gekennzeichnet ist, dass** die Exzenterwelle (7) der Exzenterscheibe (9), mit der der zweite Kurbelarm (6) gekoppelt ist, in einem Sperrklinkenlager (19) oder einem Freilauflager (23) gelagert ist, während die Welle (10) des Pedals (11) an ihrem äußeren Ende mit einer zweiten Exzenterscheibe (20) gekoppelt ist, deren Exzenterwelle der Exzenterwelle (7) der Exzenterscheibe (9) diametral gegenüberliegt, wobei das entsprechende Pedal (11) so daran befestigt ist, dass die Verlängerungen beider Exzenterscheiben (9, 20) verbunden sind, wobei die Länge des durch den Hauptkurbelarm (3) und dessen entsprechende Verlängerung (4) gebildeten Pedalhebels verlängert oder verkürzt wird, je nachdem, ob sich das Pedal in einer Ausfahr- oder Einfahrposition befindet.

2. Pedal nach Anspruch 1, **dadurch gekennzeichnet, dass** das Linearlager (5), auf dem die Verlängerung (4) beweglich ist, in den Hauptkurbelarm (3) integriert ist.

3. Pedal nach Anspruch 1, **dadurch gekennzeichnet, dass** das Linearlager (5), auf dem die Verlängerung (4) beweglich ist, in einem Zusatzteil (13) integriert ist, das nahe am Ende jedes Hauptkurbelarms (3) befestigt ist.

4. Pedal nach den vorstehenden Ansprüchen, **dadurch gekennzeichnet, dass** die Exzenterscheibe (9) beweglich an der Welle (10) des Pedals (11) befestigt ist.

5. Pedal nach den vorstehenden Ansprüchen, **dadurch gekennzeichnet, dass** das Pedal (11) beweglich an der Welle (10) befestigt ist.

6. Pedal nach Anspruch 5, **dadurch gekennzeichnet, dass die** Unterseite des Pedals (11) eine Lasche aufweist, die mit einem Bogenfenster (18) versehen ist, das einer anderen, an der Welle (10) befestigten Lasche zugewandt ist.

7. Pedal, nach einem der vorstehenden Ansprüche, **dadurch gekennzeichnet, dass** die Welle des Pedals (11) mittels eines Lagers befestigt ist, wobei die Welle (10) oder die Exzenterscheibe (20) eine Außenplatte (22) mit einem Ausschnitt aufweist, der eine Kugel (21) aufnimmt, die durch die Wirkung einer Feder, die die Betriebsstellung des Pedals (11) relativ zur Welle markiert, darin eingebettet ist, wobei die Entkopplung dieser Verriegelung, um das Pedal (11) in die dem Tretvorgang entgegengesetzte Richtung zu drehen, immer dann ermöglicht wird, wenn die Kugel (21) aus dem genannten Ausschnitt heraustritt.

## Revendications

1. Agencement de pédale de bicyclette avec des bras de manivelle extensibles, dans lequel les deux bras de manivelle principaux (3) incorporent un mécanisme pour l'extension ou le raccourcissement synchrone de ceux-ci, étendant le bras de levier dans le bras de manivelle principal (3) et raccourcissant le bras de levier dans le bras de manivelle principal (3) pendant le retrait, dans lequel les deux bras de manivelle principaux (3) incorporent une extension (4), montée longitudinalement dans chaque bras de manivelle principal (3) au moyen d'un roulement linéaire (5), ladite extension (4) comprenant à son extrémité un roulement pour un arbre (10), la pédale correspondante (11) fixée à son extrémité extérieure, et l'extrémité intérieure étant reliée axialement à un disque excentrique (9), dont un arbre excentrique (7) est couplé à un second bras de manivelle (6) qui est couplé en un point fixe (8) au bras de manivelle principal (3), la rotation de l'arbre (10) de la pédale (11) établissant le mouvement de l'extension (4), étendant ou raccourcissant la longueur du levier de pédalage formé par le bras de manivelle principal (3) et son extension correspondante (4) selon que la pédale (11) se trouve dans une position d'impulsion ou de rétraction, respectivement, la pédale de bicyclette à bras de manivelle extensibles (3) étant **caractérisée en ce que** l'arbre excentrique (7) du disque excentrique (9) auquel est couplé le second bras de manivelle (6) est monté sur un roulement de type rochet (19) ou un roulement à roue libre (23), tandis que l'arbre (10) de la pédale (11) est couplé sur son extrémité extérieure à un second disque excentrique (20), dont l'arbre excentrique est diamétralement opposé à l'arbre excentrique (7) du disque excentrique (9), la pédale correspondante (11) montée sur celui-ci, de sorte que les extensions des deux disques excentriques (9, 20) sont reliées, étendant ou raccourcissant la longueur du levier de pédalage formé par le bras de manivelle principal (3) et son extension correspondante (4), selon que la pédale se trouve dans une position d'impulsion ou de rétraction, respectivement.

2. Pédale selon la revendication 1, **caractérisée en ce que** le roulement linéaire (5) sur lequel se déplace l'extension (4) est intégrée à l'intérieur du bras de manivelle principal (3).

3. Pédale selon la revendication 1, **caractérisée en ce que** le roulement linéaire (5) sur lequel se déplace l'extension (4) est intégrée dans une partie supplémentaire (13) qui est fixée près de l'extrémité de chaque bras de manivelle principal (3).

4. Pédale selon les revendications précédentes, **caractérisée en ce que** le disque excentrique (9) est fixé de manière mobile sur l'arbre (10) de la pédale (11).

5. Pédale selon les revendications précédentes, **caractérisée en ce que** la pédale (11) est fixée de manière mobile sur l'arbre (10).

6. Pédale selon la revendication 5, **caractérisée en ce que** la face inférieure de la pédale (11) présente une patte munie d'une fenêtre arquée (18), tournée vers une autre fixée sur l'arbre (10).

7. Pédale, selon l'une quelconque des revendications précédentes, **caractérisée en ce que** l'arbre de la pédale (11) est monté au moyen d'un roulement, l'arbre (10) ou le disque excentrique (20) ayant une plaque extérieure (22) qui présente une découpe qui permet une bille (21) qui y est noyée par action d'un ressort qui marque la position de fonctionnement de la pédale (11) vis-à-vis de l'arbre, permettant le désaccouplement de ce blocage pour tourner la pédale (11) en sens inverse du pédalage lorsque la bille (21) sort de ladite découpe.
